# EUROPEAN PATENT SPECIFICATION

(11) **EP 2 025 586 B1**
(45) Date of publication and mention of the grant of the patent: **13.10.2010**
(21) Application number: 08014523.8
(22) Date of filing: 14.08.2008
(51) Int. Cl.: B62J 6/04, F21S 8/10

(54) **Rear light**
Rücklicht
Phare arrière

(30) Priority: 16.08.2007 NL 1034257
(43) Date of publication of application: 18.02.2009
(73) Proprietor: Spanninga Metaal B.V., 8501 MK Joure (NL)
(72) Inventor: Vellinga, Jacob, 8502 Al Joure (NL)
(74) Representative: Dorna, Peter

(56) References cited:
- EP-A- 0 026 943
- EP-A- 0 683 355
- EP-A- 0 890 503
- EP-A- 1 653 258
- US-A- 1 803 900
- US-A- 4 845 599
- US-B1- 6 672 741

## Description

The invention relates to a rear light for a vehicle, in particular a bicycle, which rear light comprises a mirror and a light-emitting diode (LED) disposed opposite the mirror, wherein, in a mounted position of the rear light on the vehicle, light emitted from the light-emitting diode is reflected in rearward direction by the mirror, wherein the light-emitting diode is disposed in the rear light in such a manner that the socket of the light-emitting diode, which supports the light-emitting diode and to which the current supply wire is connected, is disposed on the side of the light-emitting part of the light-emitting diode remote from the mirror.

A requirement that is made of such rear lights is that they must emit light not only in rearward direction during use, but also in lateral direction, for example at an angle of 110 °.

To effect such a light distribution when using light-emitting diodes, it has been proposed to dispose several light-emitting diodes opposite the mirror. This leads to a higher energy consumption, however, in comparison with the situation in which a single light-emitting diode is used.

To overcome this drawback, it has also been proposed to combine a single light-emitting diode with prism or mirror surfaces, which cause the light to be deflected. This leads to a comparatively complicated construction, however, whilst in addition to that a significant loss of light not captured in the optics or the mirror occurs in this case as well.

EP-A1-0 890 503 which is considered as the closest prior art discloses a rear light for a bicycle in which two light-emitting diodes are used. The main light-emitting diode is positioned with its light-emitting side facing towards the rear. In addition to that, a low-capacity diode is positioned with its light-emitting side facing towards the front, and the light emitted by said low-capacity diode partially passes through a central hole in a first mirror and is radiated in lateral direction by a further mirror disposed therebehind.

EP-A1-0 026 943 discloses a light for a bicycle, which comprises a light bulb directed towards the rear. Recesses are formed in the mirror to help ensure that light will be radiated in lateral and/or upward direction.

According to the invention, recesses are formed in opposite sides of the mirror and
elongated light-reflecting segments are disposed behind the mirror, near the recesses formed in the mirror, for the purpose of reflecting light emitted by the light-emitting diode in rearward direction, which elongated light-reflecting segments extend substantially in horizontal direction beyond the mirror. As a result, a wide-looking rear light providing significantly enhanced visibility is obtained. The safety of the driver of the vehicle is significantly improved in this way.

Recesses formed in the opposite sides of the mirror will allow light to pass in lateral direction, so that the requirement that light must also be emitted in lateral direction through a sufficiently large angle is easily met.

The light-emitting diode is preferably disposed at least substantially on the central axis of the mirror in that case.

Preferably, a further V-shaped mirror is disposed in the centre of the mirror, in such a manner that the surfaces of the V-shaped mirror, which include an angle with each other, extend in a direction away from the light-emitting diode from the junction of said surfaces, which faces towards the light-emitting diode. Said further V-shaped mirror will reflect light beyond the light-emitting diode.

Furthermore preferably, said further V-shaped mirror is disposed between the light-emitting diode and the mirror. In this way a compact construction of the rear light can be realised.

In an advantageous embodiment, the recesses formed in the mirror extend from the circumference of the mirror in the direction of the centre of the mirror, gradually decreasing in height. Via said recesses, the light from the light-emitting diode can be emitted directly to the sides of the rear light at the required angles, so that the requirement that light from the rear light must also be emitted in lateral direction to a sufficient degree can be easily met.

Preferably, said elongated light-reflecting segments are corrugated in shape. This creates an impression of a wide-looking rear light in which several light sources are disposed. Such an effect is also obtained if said elongated light-reflecting segments comprise stepped surfaces.

It is furthermore advantageous if the light-reflecting segments comprise curved surfaces, whose centres of curvature are located on the same side of the segments as the mirror.

The invention will be explained in more detail hereinafter with reference to a few possible embodiments of the construction according to the invention as shown in the appended figures.
Figure 1 is a side view of a mirror and a light-emitting diode (LED) disposed opposite the mirror.
Figure 2 is a smaller-scale perspective view of said mirror and said light-emitting diode.

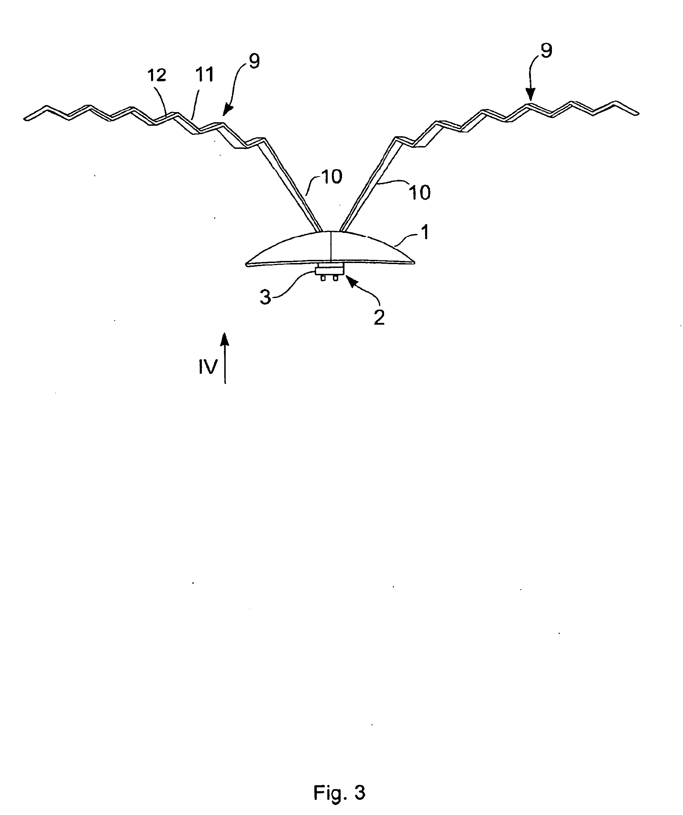

Figure 3 is a top plan view of the mirror and associated light-reflecting segments.

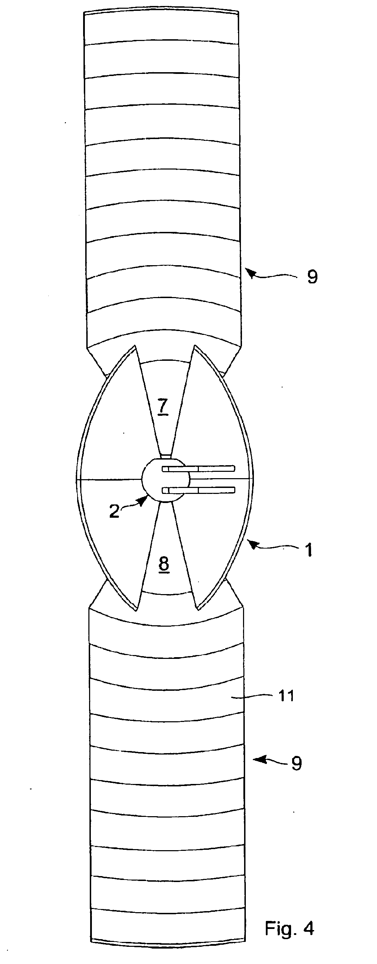

Figure 4 is a view of figure 3, seen in the direction indicated by the arrow IV in figure 3.

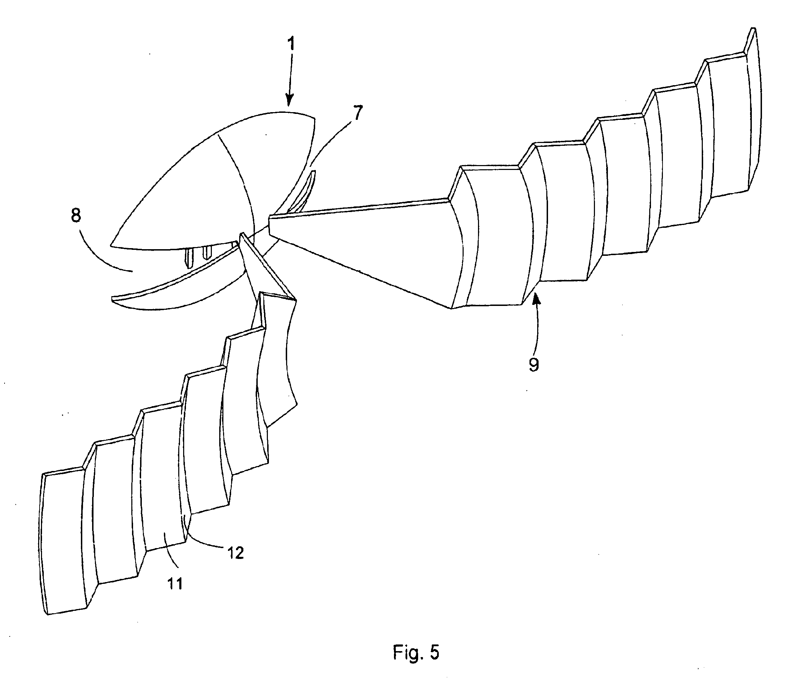

Figure 5 is a perspective rear view of the construction shown in figure 3.

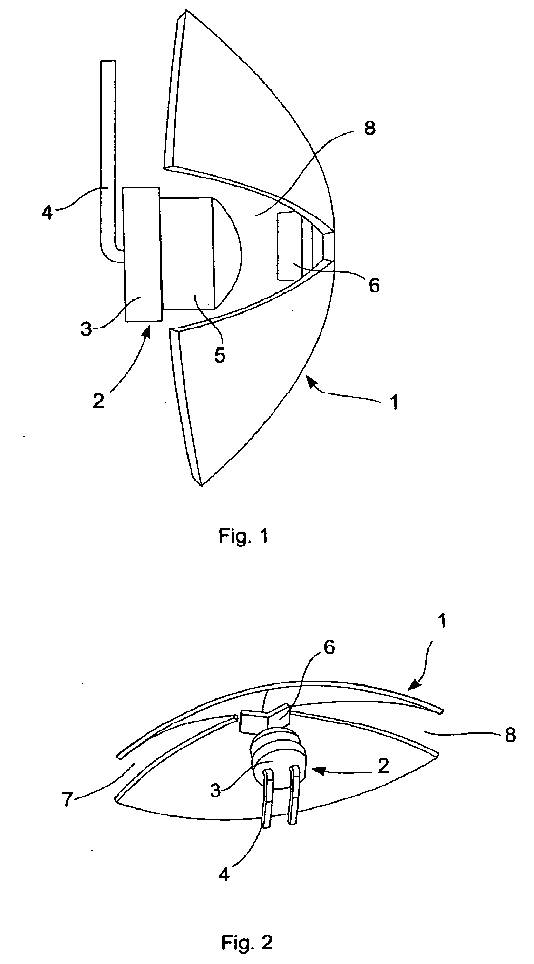

In figure 1 a usual mirror 1 is shown, which mirror is suitable for being mounted in the housing (not shown) of a rear light. Opposite the mirror 1, a light-emitting diode 2 (LED) is disposed on the longitudinal axis of the mirror, in such a manner that the socket 3 of said light-emitting diode, which supports the light-emitting diode in the rear light and to which a current supply wire 4 is connected, is disposed on the side of the light-emitting part 5 of the light-emitting diode remote from the mirror 1.

Preferably, a light-emitting diode having a large emitting angle of about 110-140 ° is used.

As a result of the above-described arrangement of the light-emitting diode 2, the light that is emitted from the light-producing part 5 of the light-emitting diode will shine directly on the mirror 1, so that nearly all the light emitted by the light-emitting diode will be captured and reflected by the mirror 1. An additional V-shaped mirror 6 is disposed in the centre of the mirror 1, the two surfaces of which mirror, which include an angle with each other, extend from the apex of the V-shaped mirror in a direction away from the light-emitting diode 2, as will be apparent in particular from figure 2. Said V-shaped mirror will reflect light beyond the light-emitting diode 2.

Openings 7 and 8 located opposite each other are furthermore provided in the sides of the mirror, which openings are more or less V-shaped and which gradually narrow from the circumferential edge of the mirror in the direction of the centre of the mirror.

Via said openings 7 and 8, the light from the light-emitting diode can be emitted directly to the sides of the rear light at the desired angles, so that the requirement that the light from the rear light must also be emitted in lateral direction to a sufficient degree can be easily met.

To obtain a wide-looking rear light, stepped light-reflecting segments 9 may be disposed at the rear side of the mirror, spaced therefrom by some distance, as is shown in the figures, which segments are connected to the rear side of the mirror 1 by means of connecting ridges 10. The stepped segments 9 also extend in a substantially horizontal direction near the openings 7, 8 in the mirror. Each stepped segment 9 is built up of a number of curved surfaces 11, which are connected by connecting surfaces 12 extending transversely to said curved surfaces. The centres of curvature of said curved surfaces 11 are located on the same side of said surfaces as the mirror disposed in front of said surfaces.

Light emitted through the openings 7, 8 formed in the mirror 1 will be partially captured by said segments 9 and be reflected in rearward direction from the rear light, thus creating an impression of a wide-looking rear light in which several light sources are disposed.

## Claims

1. A rear light for a vehicle, in particular a bicycle, which rear light comprises a mirror (1) and a light-emitting diode (LED) (2) disposed opposite the mirror, wherein, in a mounted position of the rear light on the vehicle, light emitted from the light-emitting diode is reflected in rearward direction by the mirror, wherein the light-emitting diode is disposed in the rear light in such a manner that the socket (3) of the light-emitting diode, which supports the light-emitting diode and to which a current supply wire (4) is connected, is disposed on the side of the light-emitting part of the light-emitting diode remote from the mirror, **characterised in that** recesses (7,8) are formed in opposite sides of the mirror, and **in that** elongated light-reflecting segments (9) are disposed behind the mirror (1), near the recesses (7, 8) formed in the mirror, for the purpose of reflecting light emitted by the light-emitting diode (2) in rearward direction, which elongated light-reflecting segments extend substantially in horizontal direction beyond the mirror.

2. A rear light according to claim 1, **characterised in that** the light-emitting diode (2) is disposed at least substantially on the central axis of the mirror (1).

3. A rear light according to claim 1 or 2, **characterised in that** a further V-shaped mirror (6) is disposed in the centre of the mirror (1), in such a manner that the surfaces of the V-shaped mirror, which include an angle with each other, extend in a direction away from the light-emitting diode from the junction of said surfaces, which faces towards the light-emitting diode.

4. A rear light according to claim 3, **characterised in that** said further V-shaped mirror (6) is disposed between the light-emitting diode (2) and the mirror (1).

5. A rear light according to any one of the preceding claims, **characterised in that** the recesses (7, 8) formed in the mirror (1) extend from the circumference of the mirror in the direction of the centre of the mirror, gradually decreasing in height.

6. A rear light according to any one of the preceeding claims, **characterised in that** said elongated light-reflecting segments (9) are corrugated in shape.

7. A rear light according to any one of the preceeding claims, **characterised in that** said elongated light-reflecting segments comprise stepped surfaces.

8. A rear light according to any one of the preceeding claims, **characterised in that** the light-reflecting segments comprise curved surfaces (11), whose centres of curvature are located on the same side of the segments as the mirror.

## Patentansprüche

1. Rücklicht für ein Fahrzeug, insbesondere ein Fahrrad, wobei das Rücklicht einen Spiegel (1) und eine dem Spiegel gegenüberliegend angeordnete Leuchtdiode (LED) (2) umfasst, wobei in einer Stellung, in der das Rücklicht am Fahrzeug montiert ist, von der Leuchtdiode ausgesendetes Licht vom Spiegel in eine rückwärtige Richtung reflektiert wird, wobei die Leuchtdiode so im Rücklicht angeordnet ist, dass die Fassung (3) der Leuchtdiode, die die Leuchtdiode trägt und an die ein Stromversorgungsdraht (4) angeschlossen ist, auf der von dem Spiegel entfernten Seite des Licht aussendenden Teils der Leuchtdiode angeordnet ist, **dadurch gekennzeichnet, dass** in gegenüberliegenden Seiten des Spiegels Aussparungen (7, 8) ausgebildet sind und dass hinter dem Spiegel (1) nahe den in dem Spiegel ausgebildeten Aussparungen (7, 8) langgestreckte, lichtreflektierende Abschnitte (9) angeordnet sind, um von der Leuchtdiode (2) ausgesendetes Licht nach hinten zu reflektieren, wobei sich die langgestreckten, lichtreflektierenden Abschnitte im wesentlichen in horizontaler Richtung über den Spiegel hinaus erstrecken.

2. Rücklicht gemäß Anspruch 1, **dadurch gekennzeichnet, dass** die Leuchtdiode (2) zumindest im wesentlichen auf der Mittelachse des Spiegels (1) angeordnet ist.

3. Rücklicht gemäß Anspruch 1 oder 2, **dadurch gekennzeichnet, dass** in der Mitte des Spiegels (1) ein weiterer V-förmiger Spiegel (6) so angeordnet ist, dass sich die Flächen des V-förmigen Spiegels, die miteinander einen Winkel einschließen, von der der Leuchtdiode zugewandten Verbindungsstelle der Flächen aus in einer Richtung von der Leuchtdiode weg erstrecken.

4. Rücklicht gemäß Anspruch 3, **dadurch gekennzeichnet, dass** der weitere V-förmige Spiegel (6) zwischen der Leuchtdiode (2) und dem Spiegel (1) angeordnet ist.

5. Rücklicht gemäß einem der vorhergehenden Ansprüche, **dadurch gekennzeichnet, dass** sich die im Spiegel (1) ausgebildeten Aussparungen (7, 8) vom Umfang des Spiegels in Richtung auf die Mitte des Spiegels erstrecken, wobei ihre Höhe allmählich abnimmt.

6. Rücklicht gemäß einem der vorhergehenden Ansprüche, **dadurch gekennzeichnet, dass** die langgestreckten, lichtreflektierenden Abschnitte (9) eine geriffelte Form aufweisen.

7. Rücklicht gemäß einem der vorhergehenden Ansprüche, **dadurch gekennzeichnet, dass** die langgestreckten, lichtreflektierenden Abschnitte gestufte Flächen umfassen.

8. Rücklicht gemäß einem der vorhergehenden Ansprüche, **dadurch gekennzeichnet, dass** die lichtreflektierenden Abschnitte gekrümmte Flächen (11) umfassen, deren Krümmungsmittelpunkt auf derselben Seite der Abschnitte wie der Spiegel liegt.

## Revendications

1. Phare arrière pour un véhicule, en particulier une bicyclette, lequel phare arrière comprend un miroir (1) et une diode électroluminescente (LED) (2) disposée à l'opposé du miroir, dans lequel, dans une position montée du phare arrière sur le véhicule, la lumière émise de la diode électroluminescente est réfléchie dans la direction arrière par le miroir, dans lequel la diode électroluminescente est disposée dans le phare arrière de sorte que la douille (3) de la diode électroluminescente, qui supporte la diode électroluminescente et à laquelle un fil d'alimentation de courant (4) est raccordé, est disposée sur le côté de la partie d'émission de lumière de la diode électroluminescente à distance du miroir, **caractérisé en ce que** des évidements (7, 8) sont formés sur les côtés opposés du miroir, et **en ce que** des segments de réflexion de lumière allongés (9) sont disposés derrière le miroir (1), à proximité des évidements (7, 8) formés dans le miroir afin de réfléchir la lumière émise par la diode électroluminescente (2) dans la direction arrière, lesquels segments de réflexion de lumière allongés s'étendent sensiblement dans la direction horizontale au-delà du miroir.

2. Phare arrière selon la revendication 1, **caractérisé en ce que** la diode électroluminescente (2) est disposée au moins sensiblement sur l'axe central du miroir (1).

3. Phare arrière selon la revendication 1 ou 2, **caractérisé en ce qu'**un autre miroir en forme de V (6) est disposé au centre du miroir (1), de sorte que les surfaces du miroir en forme de V, qui comprennent un angle l'une par rapport à l'autre, s'étendent dans une direction à distance de la diode électroluminescente par rapport à la jonction desdites surfaces, qui est orientée vers la diode électroluminescente.

4. Phare arrière selon la revendication 3, **caractérisé en ce que** ledit miroir en forme de V supplémentaire (6) est disposé entre la diode électroluminescente (2) et le miroir (1).

5. Phare arrière selon l'une quelconque des revendications précédentes, **caractérisé en ce que** les évidements (7, 8) formés dans le miroir (1) s'étendent à partir de la circonférence du miroir dans la direction du centre du miroir, diminuant progressivement en hauteur.

6. Phare arrière selon l'une quelconque des revendications précédentes, **caractérisé en ce que** lesdits segments de réflexion de lumière allongés (9) ont une forme ondulée.

7. Phare arrière selon l'une quelconque des revendications précédentes, **caractérisé en ce que** lesdits segments de réflexion de lumière allongés comprennent des surfaces étagées.

8. Phare arrière selon l'une quelconque des revendications précédentes, **caractérisé en ce que** les segments de réflexion de lumière comprennent des surfaces incurvées (11), dont les centres de courbure sont situés du même côté des segments que le miroir.
